# EUROPEAN PATENT APPLICATION

(11) **EP 3 882 591 A1**
(43) Date of publication of application: **22.09.2021**
(21) Application number: 19884922.6
(22) Date of filing: 14.11.2019
(51) Int. Cl.: G01H 3/00

(54) **SOUND STATE DISPLAY METHOD, SOUND STATE DISPLAY APPARATUS, AND SOUND STATE DISPLAY SYSTEM**

(30) Priority: 14.11.2018 JP 2018213587
(71) Applicant: Panasonic Intellectual Property Management Co., Ltd., Osaka-shi, Osaka 540-6207 (JP)
(72) Inventor: IZUMI, Akitoshi, Osaka-shi, Osaka 540-6207 (JP); YUGE, Ryoichi, Osaka-shi, Osaka 540-6207 (JP)
(74) Representative: Eisenführ Speiser
(86) International application number: PCT/JP2019/044649
(87) International publication number: WO 2020/100967

(57) **Abstract**

A sound state display method includes the steps of: acquiring sound data obtained by collecting a sound emitted from an inspection target; performing analysis processing based on the sound data, the analysis processing relating to plural different indices to indicate presence or absence of an abnormality in the inspection target; generating a sound state screen based on a result of the analysis processing, the sound state screen indicating a sound state of the sound emitted from the inspection target using the plural different indices; and displaying the generated sound state screen on a display device.

## Description

### TECHNICAL FIELD

The present disclosure relates to a sound state display method, a sound state display apparatus, and a sound state display system for displaying a state of a sound emitted from an inspection target.

### BACKGROUND ART

Systems that collect a sound emitted from a target object or generated in a target space or the like and detect an abnormality, judge whether products are good or not, or do a like act by analyzing acquired sound data are used conventionally in manufacturing factories etc. For example, Patent Literature 1 discloses, as an apparatus to be used for an analysis of this kind, an abnormality judging method and apparatus capable of judging stably whether a product having a vibration portion is normal or has any of various kinds of abnormality. According to Patent Literature 1, a time-axis waveform analysis that obtains a time-axis waveform from measurement data and analyzes the time-axis waveform and a frequency-axis waveform analysis that obtains a frequency-axis waveform from the measurement data and analyzes the frequency-axis waveform are performed and whether an abnormality has occurred in a product is judged on the basis of a total judgment result of the time-axis waveform analysis and the frequency-axis waveform analysis.

### CITATION LIST

### PATENT LITERATURE

Patent Literature 1: JP-A-H11-173909

### SUMMARY OF INVENTION

### TECHNICAL PROBLEMS

In the configuration of Patent Literature 1, no consideration is given to presenting, to an inspector who is to check whether a state of a sound emitted from an inspection target is good or not, a state of a sound (hereinafter referred to as a "sound state") emitted from the inspection target in an easy-to-understand manner using a user interface. Thus, in the case of an inspector who is not accustomed to inspection work, for example, is not a skilled person but a layman, it is difficult for him or her to recognize a normal/abnormal state of an inspection target and hence to, for example, find out a cause in the event of an abnormality. On the other hand, in the case of an inspector who is a skilled person rather than a layman, there is demand that how an inspection target has been judged normal by machine processing be visualized to persuade himself or herself of it.

The concept of the present disclosure has been conceived in view of the above circumstances, and an object of the present disclosure is to provide a sound state display method, a sound state display apparatus, and a sound state display system for presenting, to an inspector, a normal/abnormal state of an inspection target in an easy-to-understand manner and thereby assisting in increasing the convenience of inspection work of the inspector.

### SOLUTION TO PROBLEM

The disclosure provides a sound state display method including the steps of: acquiring sound data obtained by collecting a sound emitted from an inspection target; performing analysis processing based on the sound data, the analysis processing relating to plural indices to indicate presence or absence of an abnormality in the inspection target; generating a sound state screen based on a result of the analysis processing, the sound state screen indicating a sound state of the sound emitted from the inspection target using the plural indices; and displaying the generated sound state screen on a display device.

The disclosure also provides a sound state display apparatus including: an acquisition unit configured to acquire sound data obtained by collecting a sound emitted from an inspection target; an analysis unit configured to perform analysis processing based on the sound data, the analysis processing relating to plural indices to indicate presence or absence of an abnormality in the inspection target; a generation unit configured to generate a sound state screen based on a result of the analysis processing, the sound state screen indicating a sound state of the sound emitted from the inspection target using the plural indices; and a display control unit configured to display the generated sound state screen on a display device.

The disclosure further provides a sound state display system including: an acquisition unit configured to acquire sound data obtained by collecting a sound emitted from an inspection target; an analysis unit configured to perform analysis processing based on the sound date, the analysis processing relating to plural indices to indicate presence or absence of an abnormality in the inspection target; a generation unit configured to generate a sound state screen based on a result of the analysis processing, the sound state screen indicating a sound state of the sound emitted from the inspection target using the plural indices; and a display control unit configured to display the generated sound state screen on a display device.

### ADVANTAGEOUS EFFECTS OF INVENTION

The disclosure makes it possible to present, to an inspector, a normal/abnormal state of an inspection target in an easy-to-understand manner and thereby assist in increasing the convenience of inspection work of the inspector.

### BRIEF DESCRIPTION OF DRAWINGS

Fig. 1A is a block diagram showing an example system configuration of a sound state display system according to a first embodiment.
Fig. 1B is a block diagram showing an example system configuration of an information processing apparatus of the sound state display system according to the first embodiment.
Fig. 2A is an explanatory diagram showing a first use case relating to collection of sounds emitted from inspection targets.
Fig. 2B is an explanatory diagram showing a second use case relating to collection of sounds emitted from inspection targets.
Fig. 3 shows an example sound state transition display screen.
Fig. 4 shows an example waveform display screen.
Fig. 5 shows an example frequency display screen.
Fig. 6 shows an example pulsation display screen.
Fig. 7 is a diagram showing example transitions between display screens.
Fig. 8 is a flowchart showing an example operation procedure according to the first embodiment that relates to collection of a mechanical sound emitted from an inspection target and detection of an abnormality.
Fig. 9A is a flowchart showing an example operation procedure according to the first embodiment that relates to generation of a sound state transition display screen.
Fig. 9B is a flowchart showing an example display screen generation procedure according to the first embodiment.
Fig. 10 is a block diagram showing an example system configuration of another sound state display system according to the first embodiment.

### DESCRIPTION OF EMBODIMENTS

An embodiment as a specific disclosure of how a sound state display method, a sound state display apparatus, and a sound state display system according to the present disclosure are made up of and work will be described in detail by referring to the drawings when necessary. However, unnecessarily detailed descriptions may be avoided. For example, detailed descriptions of already well-known items and duplicated descriptions of constituent elements having substantially the same ones already described may be omitted. This is to prevent the following description from becoming unnecessarily redundant and thereby facilitate understanding of those skilled in the art. The following description and the accompanying drawings are provided to allow those skilled in the art to understand the disclosure thoroughly and are not intended to restrict the subject matter set forth in the claims.

### (Configuration of sound state display system)

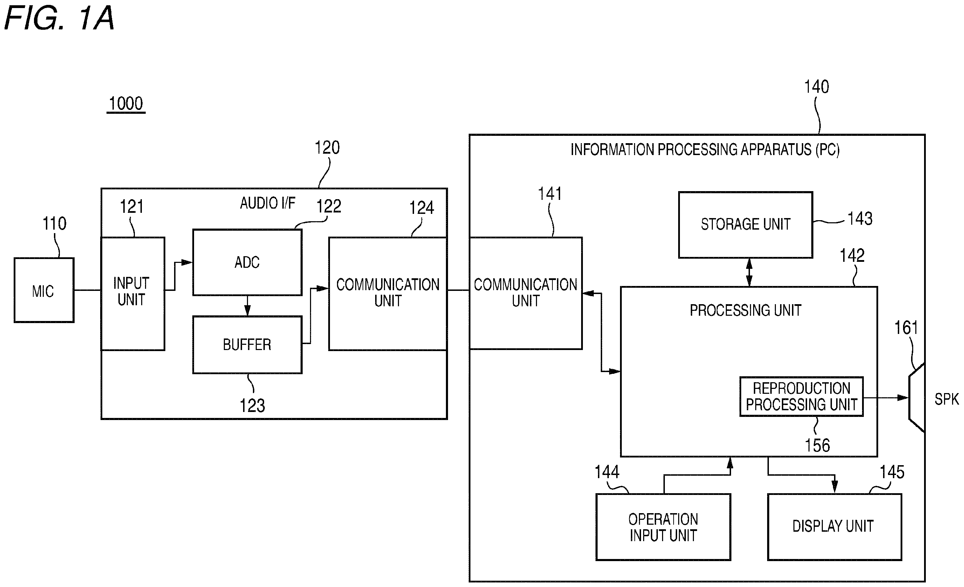

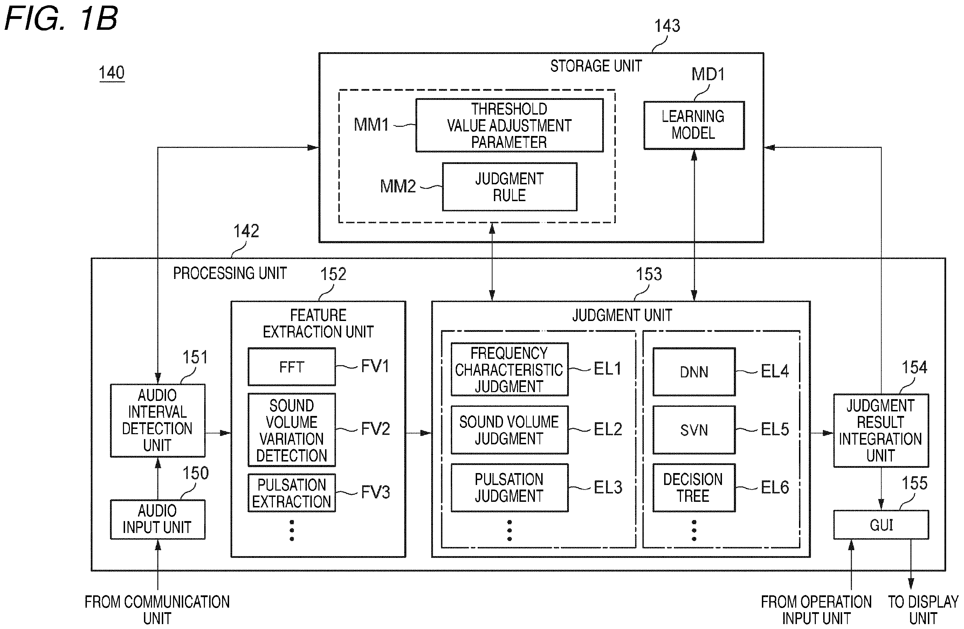

Fig. 1A is a block diagram showing an example system configuration of a sound state display system 1000 according to a first embodiment. Fig. 1B is a block diagram showing an example system configuration of an information processing apparatus 140 of the sound state display system 1000 according to the first embodiment. In the first embodiment, the sound state display system 1000 which, when a sound (e.g., mechanical sound) emitted from an inspection target installed in an inspection target area is detected by an inspector using one or plural microphones, detects presence/absence of an abnormality in the inspection target by analyzing sound data acquired by the sound collection and displays a result of the analysis will be described as an example. The sound state display system 1000 is configured so as to include one or plural microphones 110, an audio interface 120, and the information processing apparatus 140. In Fig. 1A, the microphone(s) and the interface are denoted by "MIC" and "I/F," respectively, for the sake of convenience. The sound state display system 1000 shown in Fig. 1A may detect presence/absence of an abnormality by analyzing acquired vibration waveform data by using a vibration sensor(s) in place of the microphone(s) 110 and using an audio interface 120 capable of processing an output of the vibration sensor(s). In this case, data to be subjected to analysis processing of the sound state display system 1000 is vibration waveform data rather than sound data. Since a sound is vibration of air, it can also be said that a sound state display system can detect presence/absence of an abnormality in a sound emitted from an inspection target.

The (or each) microphone 110 is configured so as to have a sound collection device that receives (collects) a sound (sound waves) emitted from an inspection target (e.g., air-conditioner, compressor, fan of a large server, mechanical component such as a motor provided in an industrial machine) in an inspection target area and outputs an audio signal (or vibration waveform signal; this also applies to the following description) that is an electrical signal. When collecting a sound (e.g., mechanical sound) emitted from the inspection target, the microphone(s) 110 transmits an audio signal relating to that sound to the audio interface 120. The inspection target is not limited to an air-conditioner, compressor, a fan of a large server, a mechanical component such as a motor provided in an industrial machine as mentioned above.

The audio interface 120 is an audio input interface for converting an audio signal obtained by sound collection by the microphone(s) 110 into digital data that can be subjected to various kinds of signal processing. The audio interface 120 is configured so as to include an input unit 121, an AD converter 122, a buffer 123, and a communication unit 124. In Fig. 1A, the AD converter is denoted by "ADC" for the sake of convenience.

The input unit 121 has an input terminal for receiving an audio signal.

The AD converter 122 converts an analog audio signal into digital sound data (or vibration waveform data; this also applies to the following description) using prescribed quantization bits or sampling frequency. The sampling frequency of the AD converter 122 is 48 kHz, for example.

Having a memory for holding sound data, the buffer 123 buffers sound data of a prescribed time. The buffering capacity of the buffer 123 is set at about 40 ms, for example. Employing such a relatively small buffering capacity makes it possible to shorten the delay of, for example, sound recording processing performed in the sound state display system 1000.

Having a communication interface such as USB (Universal Serial Bus), the communication unit 124 can transmit and receive data to and from an external apparatus such as the information processing apparatus 140. The communication unit 124 transmits digital sound data obtained by conversion by the AD converter 122 to the information processing apparatus 140.

The information processing apparatus 140, which is, for example, a PC (personal computer) having hardware components such as a processor and a memory, performs various kinds of information processing relating to processing of analyzing a sound emitted from an inspection target (in other words, a sound collected by the microphone 110), processing of examining analysis results, processing of generating and displaying a sound state transition display screen (described later), and other processing. In the following, a sound collected by the microphone 110 will be referred to as "a recorded sound." The information processing apparatus 140 may be any of various information processing apparatus such as a tablet terminal and a smartphone instead of a PC. The information processing apparatus 140 is configured so as to include a communication unit 141, a processing unit 142, a storage unit 143, an operation input unit 144, and a display unit 145.

The communication unit 141 is configured using a communication circuit having a communication interface such as USB (Universal Serial Bus) and can transmit and receive data to and from an external device such as the audio interface 120. The communication unit 141 receives sound data of a recorded sound transmitted from the audio interface 120.

The processing unit 142 is configured using a processor such as a CPU (central processing unit), a DSP (digital signal processor), or an FPGA (field-programmable gate array). The processing unit 142 performs various kinds of processing (e.g., processing of analyzing a recorded sound, processing of examining analysis results, and processing of generating and displaying a sound state transition display screen) in accordance with prescribed programs stored in the storage unit 143.

The processing of analyzing a recorded sound is processing of analyzing, to judge presence/absence of an abnormality in an inspection target, a sound emitted from the inspection target and collected (recorded) by the microphone 110 to obtain a variation amount from a characteristic in a reference state (i.e., normal state) and a tendency (frequency) of generation of a sudden abnormal sound from the viewpoint of one or plural (e.g., two) different indices. For example, the plural different indices are a degree of variation or a variation amount of a sound emitted from an inspection target steadily (i.e., steady-state sound) and a frequency of occurrence of a sound emitted from the inspection target suddenly.

The processing of examining analysis results is processing of identifying at what location of the inspection target a cause of an abnormality exists from the results of the analysis processing on the basis of the results of the analysis processing and a collation database (described later) stored in the storage unit 143.

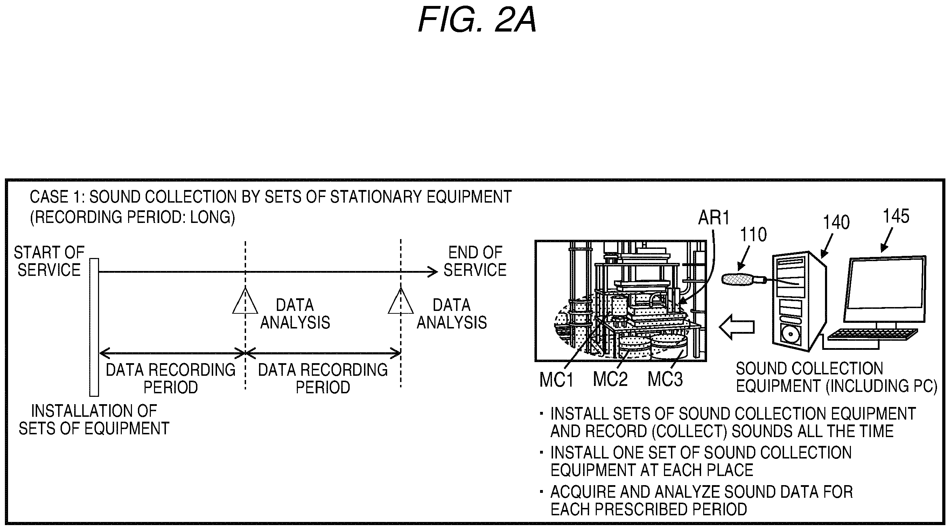

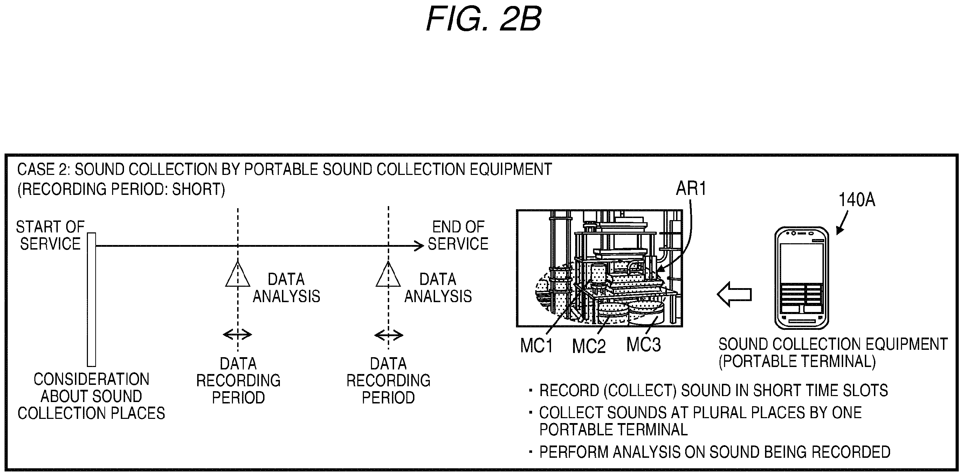

The processing of generating and displaying a sound state transition display screen is processing of generating a sound state transition display screen (one form of a sound state screen) indicating visually a state of a sound emitted from an inspection target on the basis of the above-mentioned one or plural different indices and displaying it on the display unit 145. The details of the sound state transition display screen WD1 will be described later with reference to Fig. 2.

The processing unit 142 has, as functional units using software or the like, an audio input unit 150, an audio interval detection unit 151, a feature extraction unit 152, a judgment unit 153, a judgment result integration unit 154, a GUI (graphical user interface) 155, and a reproduction processing unit 156.

The audio input unit 150 receives, from the communication unit 141, a recorded sound emitted from an inspection target and collected (recorded) by the microphone 110. The audio input unit 150 outputs the received recorded sound to the audio interval detection unit 151 and also outputs the received recorded sound to the storage unit 143 in the form of a Wav format to have it stored in the storage unit 143. Alternatively, the audio input unit 150 may have the received recorded sound stored in the form of a Wav format.

The audio interval detection unit 151 detects an audio interval, in which a sound of an inspection target is collected, of a recorded sound of a prescribed period that is input from the audio input unit 150 on the basis of an installation location of the inspection target, information indicating the inspection target, and a sound collection time that have been input by a user operation. The audio interval detection unit 151 outputs an audio interval detection result to the feature extraction unit 152.

The feature extraction unit 152 performs analysis processing in the audio interval indicated by the detection result received from the audio interval detection unit 151. The feature extraction unit 152 performs analysis processing using each of plural analyzing methods such as FFT (fast Fourier transform), sound volume variation detection, and pulsation extraction and extracts feature points obtained as analysis results of the analysis methods, respectively. The analysis processing method shown in Fig. 1B is an example and the disclosure is not limited to it. The analysis methods that can be performed by the feature extraction unit 152 are selected for each inspection target. Furthermore, the feature extraction unit 152 may be such as to enable addition of analysis methods other than the existing ones as optional functions if a user desires to do so. The feature extraction unit 152 outputs information relating to the extracted feature points to the judgment unit 153.

The judgment unit 153 judges presence/absence of an abnormality for each of the plural feature points received from the feature extraction unit 152. Having plural techniques/functions (frequency characteristic judgment EL1, sound volume judgment EL2, pulsation judgment EL3, DNN (deep neural network) EL4, SVN (sub-version) EL5, decision tree EL6, etc.), the judgment unit 153 judges presence/absence of an abnormality for each of the plural feature points obtained by the respective analysis methods, using these functions. The judgment unit 153 may select techniques/functions to be used for the judgment in accordance with an inspection target or an installation location of an inspection target.

The judgment unit 153 outputs, to the judgment result integration unit 154, results of judgments as to presence/absence of an abnormality for each feature point made by the respective technique/functions. The functions shown in Fig. 1B are just examples and it goes without saying that the disclosure is not limited to these functions. Furthermore, functions selected by a user in a desired manner may be added as optional functions and provided in the judgment unit 153. This allows the user to implement an information processing apparatus 140 that is equipped with only more adaptive functions in accordance with an inspection target or an installation location of an inspection target.

Among the functions provided in the judgment unit 153, each of the frequency characteristic judgment EL1, the sound volume judgment EL2, the pulsation judgment EL3 may be subjected to data update through input, as latest data, of threshold adjustment parameters MM1 that are stored in the storage unit 143 as information of various threshold values to be used for judgment of presence/absence of abnormality or judgment rules MM2 that are stored in the storage unit 143 as rules for judgment of presence/absence of an abnormality in accordance with, for example, an inspection target or an installation location of an inspection target. Likewise, among the functions provided in the judgment unit 153, each of the DNN EL4, the SVN EL5, and the decision tree EL6 may be subjected to data update through input, as latest model data, from learning models MD1 stored in the storage unit 143.

The various judgment functions will now be described. The frequency characteristic judgment EL1 is a function that enables judgment as to presence/absence of an abnormality by analyzing a feature point on the basis of a frequency characteristic of a recorded sound. The sound volume judgment EL2 is a function that enables judgment as to presence/absence of an abnormality by analyzing a feature point on the basis of the sound volume of a recorded sound. The pulsation judgment EL3 is a function that enables judgment as to presence/absence of an abnormality by analyzing a feature point on the basis of a pulsation characteristic of a recorded sound. The DNN EL4 is a function that enables judgment as to presence/absence of an abnormality by analyzing a feature points of a recorded sound using a DNN The SVN EL5 is a function that enables judgment as to presence/absence of an abnormality by analyzing a feature point of a recorded sound using an SVN The decision tree EL6 is a function that enables judgment as to presence/absence of an abnormality by analyzing a feature point of a recorded sound using a decision tree. These various judgment functions are realized by the functions such as the frequency characteristic judgment EL1, the sound volume judgment EL2, and the pulsation judgment EL3 for performing analyses on the basis of the threshold adjustment parameters MM1 or judgment rules MM2 stored in the storage unit 143, the functions such as the DNN EL4, the SVN EL5, and the decision tree EL6 for performing analyses on the basis of learning data owned by the learning models MD1, and other functions.

The judgment result integration unit 154 integrates the judgment results as to presence/absence of an abnormality for each of the feature points extracted from the recorded sound on the basis of the judgment results made by the techniques/functions and received from the judgment unit 153. The judgment result integration unit 154 outputs an integrated judgment result to the storage unit 143 and has it stored there and also outputs it to the GUI 155. The judgment result integration unit 154 may output, to the storage unit 143, not only the integrated judgment result but also the judgment results received from the judgment unit 153. Furthermore, the judgment result integration unit 154 may correlate the judgment results received from the judgment unit 153 with information indicating the techniques/functions that have made those judgments and then output resulting correlated information to the storage unit 143. As a result, the threshold adjustment parameters MM1, the judgment rules MM2, and the learning models MD1 stored in the storage unit 143 make it possible to perform learning on the basis of the above judgment results and generate updated data or an updated models efficiently.

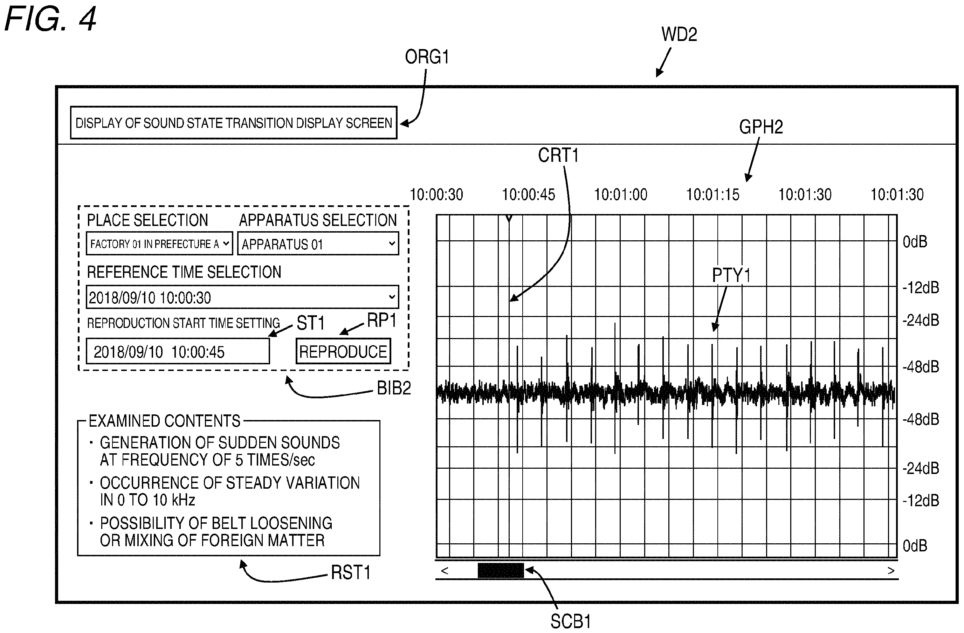

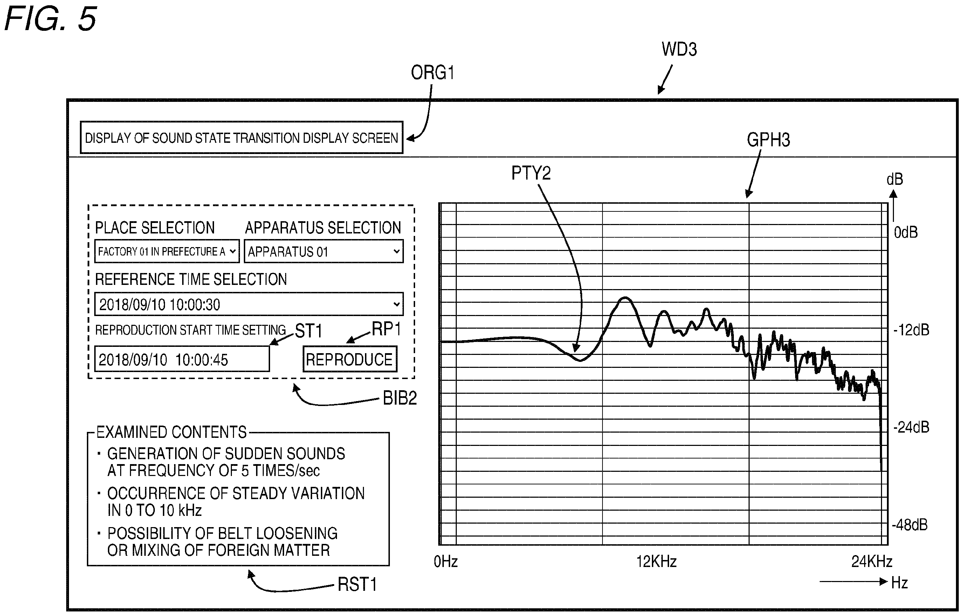

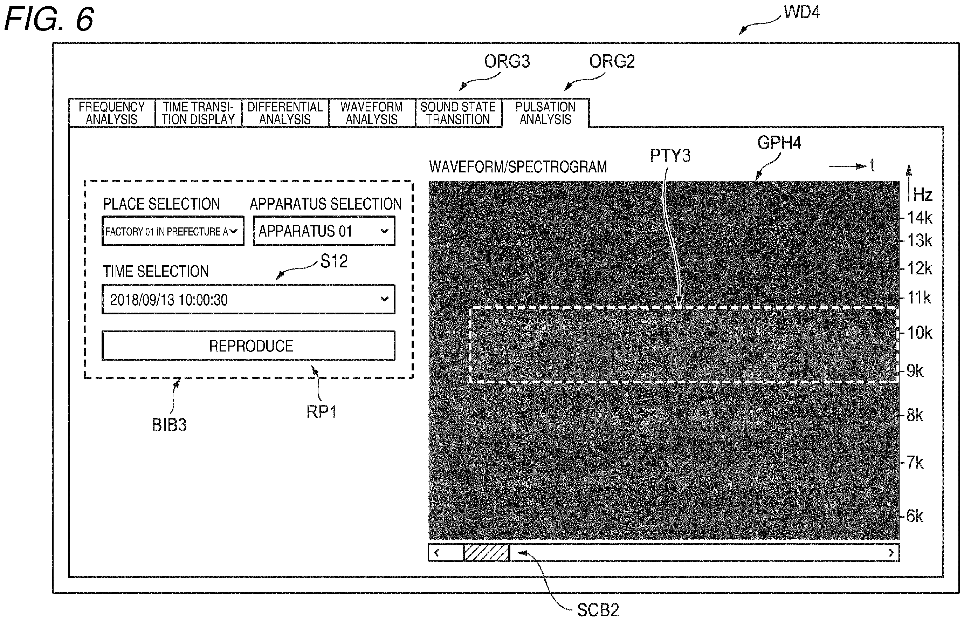

The GUI 155, which is what is called a UI (user interface), generates various screens (e.g., waveform display screen WD2 (see Fig. 4), frequency display screen WD3 (see Fig. 5), and pulsation display screen WD4 (see Fig. 6) (described later)) to be displayed on the display unit 145 on the basis of the judgment results received from the judgment result integration unit 154 in response to a user operation that is input through the operation input unit 144. The GUI 155 performs processing of dividing a screen to be generated using windows or ruled lines, processing of drawing operation targets (e.g., a time, a date, and an inspection target to be displayed) in the form of pictures or figures, and other processing. The GUI 155 inputs the generated screen to the display unit 145.

When a waveform display screen WD2 (see Fig. 4), a frequency display screen WD3 (see Fig. 5), or a pulsation display screen WD4 (see Fig. 6) is displayed on the display unit 145, the reproduction processing unit 156 causes output, from the speaker 161, of a sound recorded (collected) in a period designated by a user operation on the waveform display screen WD2, the frequency display screen WD3, or the pulsation display screen WD4 to be.

The storage unit 143 has storage devices including semiconductor memories such as a RAM (random access memory) and a ROM (read only memory) and a storage device such as an SSD (solid-state drive) or an HDD (hard disk drive). Stored with the threshold adjustment parameters MM1, the abnormality or judgment rules MM2, and the learning models MD1, the storage unit 143 generates or stores programs that define processes to be executed by the processing unit 142, various kinds of setting data relating to the sound state display system 1000, learning data to be used in performing analyses to judge presence/absence of an abnormality, and various kinds of data such as sound data transmitted from the audio interface 120. The storage unit 143 is also stored with and holds a collation database that defines a correlation, prepared in advance, between results of analysis processing performed on recorded sounds of inspection targets and causes of abnormalities that occurred in the inspection targets. This collation database may be updated as appropriate.

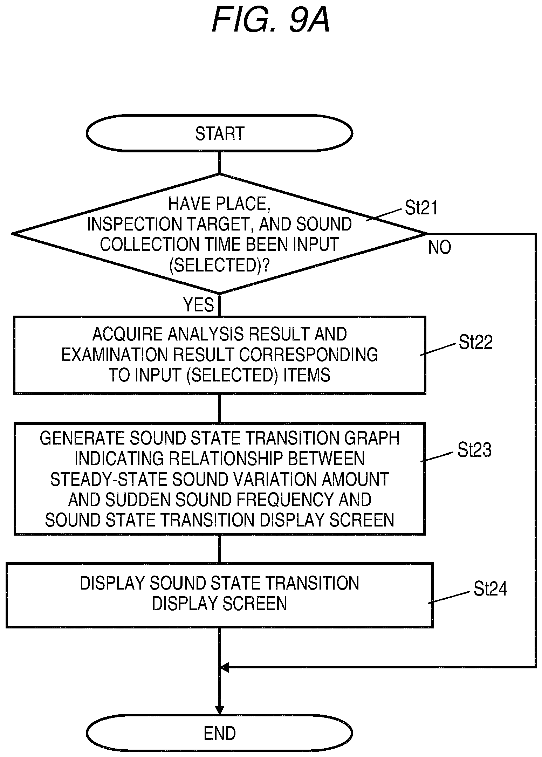

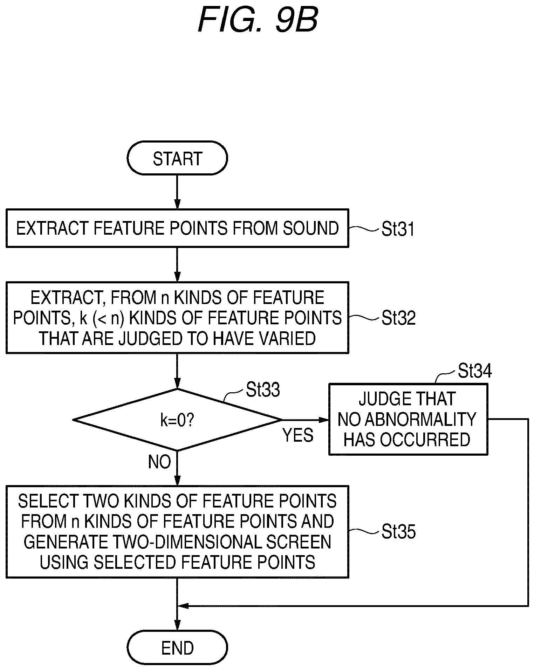

Learning for generating learning data may be performed using one or more statistical classification techniques. Example statistical classification techniques are linear classifiers, support vector machines, quadratic classifiers, kernel estimation, decision trees, artificial neural networks, Bayesian techniques and/or networks, hidden Markov models, binary classifiers, multi-class classifiers, a clustering technique, a random forest technique, a logistic regression technique, a linear regression technique, and a gradient boosting technique. However, usable statistical classification techniques are not limited to them. Furthermore, learning data may be generated by either the processing unit 142 of the information processing apparatus 140 or a server 340 (see Fig. 9) that is connected to the information processing apparatus 140 using, for example, a network. Still further, the purpose of judging acquired sound data may be not only detection of an abnormal sound in the event of a malfunction or a failure but also collection of sound data for learning to perform sound classification or voice recognition.

The operation input unit 144 is equipped with input devices such as a keyboard, a mouse, a touch pad, and a touch panel. The operation input unit 144 inputs a user operation relating to the functions of the sound state display system 1000 to the processing unit 142.

The display unit 145 which is an example display device, is configured using a display device such as a liquid crystal display or an organic EL (electroluminescence) display. The display unit 145 displays a sound state transition display screen, a waveform display screen, and a frequency display screen that are generated by the processing unit 142. In the following, a configuration that a touch panel is provided in an upper portion of the display unit 145 is assumed and an example operation of the operation input unit 144 of a case that various operation objects are displayed in a display screen and a user makes a touch operation on operation objects will be described. The display unit 145 may be a display terminal (see Fig. 2A) that is not incorporated in the information processing apparatus 140 but connected to it externally.

The speaker 161, which is, for example, a sound output device incorporated in the information processing apparatus 140, outputs a sound of sound data that is a target of reproduction processing of the reproduction processing unit 156. The speaker 161 may be a sound output device that is not incorporated in the information processing apparatus 140 but connected to it externally.

Next, two example use cases relating to collection of sounds emitted from inspection targets in the sound state display system 1000 according to the first embodiment will be described with reference to Figs. 2A and 2B. Fig. 2A is an explanatory diagram showing a first use case relating to collection of sounds emitted from inspection targets. Fig. 2B is an explanatory diagram showing a second use case relating to collection of sounds emitted from inspection targets.

In the first use case, sets of stationary sound collection equipment (described later) are always installed in an inspection target area and a sound emitted from each inspection targets is recorded (collected) for a long period.

In the second use case, a sound emitted from each inspection target is recorded (collected) for a short time in a state that portable sound collection equipment (described later) is held by an inspector who has entered an inspection target area.

In the first use case shown in Fig. 2A, sets of sound collection equipment (e.g., a set of the microphone 110, the audio interface 120, the information processing apparatus 140, and the display unit 145) are installed in an inspection target area AR1 so as to correspond to respective inspection targets MC1, MC2, and MC3. That is, the sets of sound collection equipment are installed at a start of a service using the sets of sound collection equipment and continue to be installed to an end of the service. The microphone 110 of each set of sound collection equipment records (collects) a sound emitted from the corresponding one of the inspection targets MC1, MC2, and MC3 all the time. The information processing apparatus 140 of each set of sound collection equipment performs analysis processing every time it acquires, via the corresponding audio interface 120, sound data of a sound (recording sound) emitted from the corresponding inspection target for a prescribed period (data recording period) (i.e., analysis processing is repeated on a regular basis).

In the second use case shown in Fig. 2B, short-time-slot sound recording (sound collection) is performed sequentially in a spot manner for each of the inspection targets MC1, MC2, and MC3 in a state that sound collection equipment (e.g., an information processing apparatus 140A such as a smartphone including the microphone 110, the audio interface 120, and the display unit 145 in an integrated manner) is held by an inspector who has entered the inspection target area AR1. That is, consideration is made of sound collection places at a start of a service using the sound collection equipment and short-time sound recording (collection) for inspection targets is performed individually using the sound collection equipment until an end of the service. The microphone 110 of the information processing apparatus 140A which is the sound collection equipment records (collects) sounds emitted from the respective inspection targets MC1, MC2, and MC3 sequentially. The information processing apparatus 140A which is the sound collection equipment periodically performs analysis processing every time it acquires sound data of a sound (recording sound) emitted from an inspection target in a prescribed period (data recording period) (i.e., analysis processing is repeated on a regular basis).

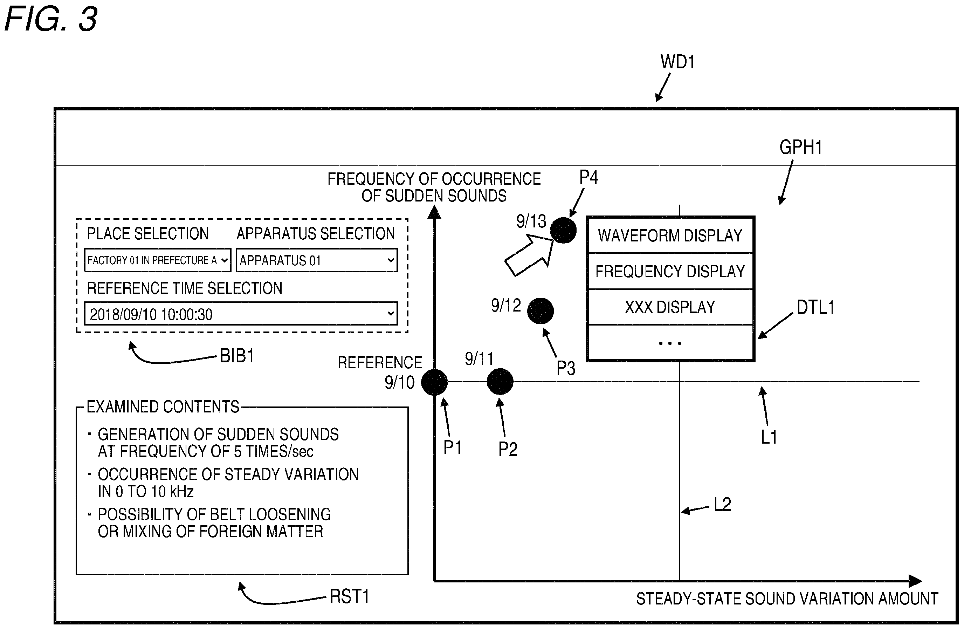

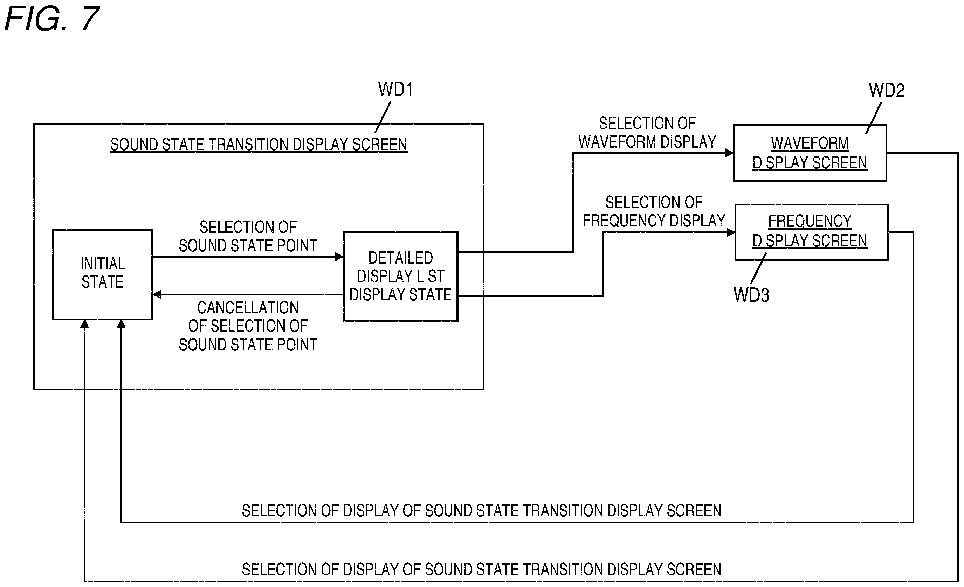

Next, various kinds of display screens to be displayed on the display unit 145 of the information processing apparatus 140 and example manners of transition between display screens will be described with reference to Figs. 3, 4, 5, and 7. Fig. 3 shows an example sound state transition display screen WD1. Fig. 4 shows an example waveform display screen WD2. Fig. 5 shows an example frequency display screen WD3. Fig. 7 is a diagram showing example transitions between display screens. In descriptions that will be made with reference to Figs. 4 and 5, respectively, elements that will also appear in a description that will be made with reference to Fig. 3 will be given the same symbols as in Fig. 3 and will be described in a simplified manner or will not be described at all; only differences will be described.

As shown in Fig. 3, the sound state transition display screen WD1 is a display screen showing, visually, bibliographical information BIB1 relating to recording (collection) of a sound emitted from an inspection target, a sound state transition graph GPH1, and examined contents RST1. The bibliographical information BIB1 shows an installation place, a date and time, and a reference selection time, designated by a user operation of recording (collection) of a sound emitted from an inspection target. In the example of Fig. 3, the installation place of the inspection target is "factory 01 in prefecture A," the name of the inspection target is "apparatus 01," and the date and time indicating a reference state of the sound state transition graph GPH1 is "September 10, 2018, AM 10:00:30." That is, the sound state transition graph GPH1 shown in Fig. 3 presents a transition relating to states of sounds emitted from the inspection target after the reference date and time (in other words, starting point) "September 10, 2018, AM 10:00:30" to a user visually in an intuitive manner.

The sound state transition graph GPH1 is a graph obtained by plotting, cumulatively, sound states at and after the reference date and time designated by the user using a total of two axes, that is, a steady sound variation amount axis (horizontal axis) and a sudden sound frequency axis (vertical axis), to judge presence/absence of an abnormality in the inspection target. Line L1 indicates a reference state of the sudden sound frequency (in other words, a normal state with no occurrence of a sudden sound). Line L2 indicates a reference state of the steady sound variation amount (in other words, a steady state in which a steady-state sound is being output). Alternatively, the reference state of the steady sound variation amount (in other words, a steady state in which a steady-state sound is being output) may be the line of the vertical axis rather than line L2.

In the example of Fig. 3, in the sound state transition graph GPH1 a sound state point P2 indicating a sound state on September 11, a sound state point P3 indicating a sound state on September 12, and a sound state point P4 indicating a sound state on September 13 are plotted with a sound state point P1 indicating a sound state on September 10. If a user operation (e.g., a right click on the operation input unit 144 such as a mouse) is performed on one sound state point (e.g., the one sound state point of September 13), the processing unit 142 displays a detailed display list DTL1 corresponding to the selected sound state point in the sound state transition graph GPH1 and also displays, as examined contents RST1, results of examination processing corresponding to a sound emitted from the inspection target and recorded (collected) on the date (e.g., September 13) of the selected sound state point.

The examined contents RST1 show, in the form of a text, results of analysis processing performed by the processing unit 142 and a result of examination processing performed by the processing unit 142 on the analysis processing results. In the example of Fig. 3, the facts that sudden sounds occurred at a frequency of "5 times/sec" and a steady-state sound variation occurred in "a frequency range 0 to 10 kHz" are shown as example examined contents RST1 (e.g., analysis processing results) and, furthermore, "a possibility of belt loosening or mixing of foreign matter" is shown as an examination processing result.

If a user operation (e.g., a left click on the operation input unit 144 such as a mouse) is performed on "waveform display" in the detailed display list DTL1, the processing unit 142 switches from the currently displayed sound state transition display screen WD1 to a waveform display screen WD2 corresponding to the "waveform display" selected by the user operation and displays the latter on the display unit 145 (see Figs. 4 and 7).

As shown in Fig. 4, the waveform display screen WD2 is a display screen showing, visually, bibliographical information BIB2 relating to recording (collection) of a sound emitted from an inspection target, a time-axis waveform graph GPH2, the examined contents RST1, and a screen switching icon ORG1. In the bibliographical information BIB2, a reproduction start time setting box ST1 and a reproduction button RP1 are added to the contents of the bibliographical information BIB1. A reproduction target date and time (e.g., "September 10, 2018, AM 10:00:45") of sound data corresponding to the time-axis waveform graph GPH2 is designated in the reproduction start time setting box ST1 by a user operation. If the reproduction button RP1 is pushed by a user operation in this state, the reproduction processing unit 156 reproduces the sound data from the designated reproduction start time and outputs a sound from the speaker 161. The reproduction processing unit 156 may display a cursor CRT 1 in such a manner that it moves in the time-axis waveform graph GPH2 in synchronism with the sound data reproduction.

The time-axis waveform graph GPH2 shows a time-axis waveform PTY1 of a recorded sound of the inspection target of a sound state point (e.g., sound state point P4) of a date selected by a user operation in the sound state transition display screen WD1. The horizontal axis represents time and the vertical axis represents the sound pressure. If a scroll bar SCB1 is slid leftward or rightward (i.e., in the time axis direction) by a user operation, the processing unit 142 scrolls the time-axis waveform PTY1 of the time-axis waveform graph GPH2 in response to the user operation. If the screen switching icon ORG1 named "display of sound state transition display screen" is pushed by a user operation, the processing unit 142 switches from the currently displayed waveform display screen WD2 to the sound state transition display screen WD1 corresponding to it and displays the latter on the display unit 145 (see Figs. 3 and 7).

As shown in Fig. 5, the frequency display screen WD3 is a display screen showing, visually, bibliographical information BIB2 relating to recording (collection) of a sound emitted from the inspection target, a frequency-axis waveform graph GPH3, the examined contents RST1, and a screen switching icon ORG1.

The frequency-axis waveform graph GPH3 shows a frequency-axis waveform PTY2 of a recorded sound of the inspection target of a sound state point (e.g., sound state point P4) of a date selected by a user operation in the sound state transition display screen WD1. The horizontal axis represents frequency and the vertical axis represents the sound pressure. If the screen switching icon ORG1 named "display of sound state transition display screen" is pushed by a user operation, the processing unit 142 switches from the currently displayed frequency display screen WD3 to the sound state transition display screen WD1 corresponding to it and displays the latter on the display unit 145 (see Figs. 3 and 7).

Fig. 6 shows an example pulsation display screen WD4. The pulsation display screen WD4 is a screen that is displayed when a screen switching icon ORG2 for displaying a pulsation display screen WD4 is selected from screen switching icons ORG3 by a user operation. The pulsation display screen WD4 is a display screen showing, visually, bibliographical information BIB3 relating to recording (collecting) the sound emitted from the inspection target, a frequency-axis waveform graph GPH4, and the screen switching icons ORG2 and ORG3. The screen switching icons ORG3 include plural icons that enable display of other display screens (e.g., frequency analysis, time transition display, differential analysis, waveform analysis, and sound state transition), and enables screen transition in response to a user operation.

The bibliographical information BIB3 is generated so as to include a reproduction start time setting box ST2 and a reproduction button RP1. A reproduction target date and time (e.g., "September 13, 2018, AM10:00:30") of sound data corresponding to the frequency-axis waveform graph GPH4 is designated in the reproduction start time setting box ST2 by a user operation. If the reproduction button RP1 is pushed by a user operation in this state, the reproduction processing unit 156 reproduces the sound data from the designated reproduction start time and outputs a sound from the speaker 161. If a scroll bar SCB2 of the frequency-axis waveform graph GPH4 is slid in leftward or rightward (i.e., time-axis direction) in synchronism with the sound data reproduction by the reproduction processing unit 156, the processing unit 142 scrolls the frequency-axis waveform GPH4 in response to the user operation.

The frequency-axis waveform GPH4 includes a pulsation waveform PTY3 of a recorded sound of the inspection target on a date selected by a user operation in the pulsation display screen WD4. The horizontal axis represents frequency and the vertical axis represents the sound pressure.

Fig. 7 shows, in detail, example transitions between the sound state transition display screen WD1 shown in Fig. 3, the waveform display screen WD2 shown in Fig. 4, and the frequency display screen WD3 shown in Fig. 5, each transition caused by a user operation on a display screen. The initial state of the sound state transition display screen WD1 is a display screen in which accumulated sound state points are displayed each of which is generated on the basis of results of analysis processing performed by the processing unit 142 every time a sound emitted from an inspection target is recorded (collected). If one sound state point is selected by a user operation, the processing unit 142 displays a detailed display list DTL1 corresponding to the selected sound state point. On the other hand, if selection of a sound state point is canceled by a user operation (e.g., a operation of clicking another potion of the sound state transition display screen WD1), the processing unit 142 stops the display of the detailed display list DTL1 and displays the initial state sound state transition display screen WD1.

If a waveform display icon is selected in a state that a detailed display list DTL1 corresponding to one sound state point selected by a user operation is displayed, the processing unit 142 switches from the currently displayed sound state transition display screen WD1 to a waveform display screen WD2 corresponding to the "waveform display" selected by the user operation and displays the latter on the display unit 145 (see Figs. 4 and 7). On the other hand, the screen switching icon ORG1 named "display of sound state transition display screen" is pushed by a user operation, the processing unit 142 switches from the currently displayed waveform display screen WD2 to a sound state transition display screen WD1 corresponding to the waveform display screen WD2 and displays the latter on the display unit 145 (see Figs. 3 and 7).

If a frequency display icon is selected in a state that a detailed display list DTL1 corresponding to one sound state point selected by a user operation is displayed, the processing unit 142 switches from the currently displayed sound state transition display screen WD1 to a frequency display screen WD3 corresponding to the "frequency display" selected by the user operation and displays the latter on the display unit 145 (see Figs. 4 and 7). On the other hand, the screen switching icon ORG1 named "display of sound state transition display screen" is pushed by a user operation, the processing unit 142 switches from the currently displayed frequency display screen WD3 to a sound state transition display screen WD1 corresponding to the frequency display screen WD3 and displays the latter on the display unit 145 (see Figs. 3 and 7).

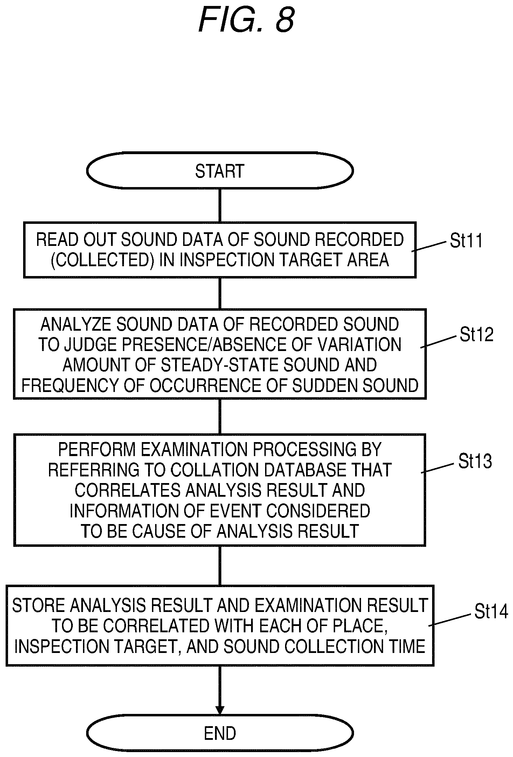

Next, examples of various operation procedures of the sound state display system 1000 according to the first embodiment will be described with reference to Figs. 8 and 9A. Fig. 8 is a flowchart showing an example operation procedure according to the first embodiment that relates to collection of a mechanical sound emitted from an inspection target and detection of an abnormality. Fig. 9A is a flowchart showing an example operation procedure according to the first embodiment that relates to generation of a sound state transition display screen.

Referring to Fig. 8, the processing unit 142 of the information processing apparatus 140 reads out, from the storage unit 143, sound data of a sound that was acquired by the microphone 110 and the audio interface 120 and recorded (collected) in an inspection target area in a prescribed period (i.e., sound data of a sound emitted from an inspection target installed in the inspection target area) (St11). Alternatively, at step St11, the processing unit 142 may directly acquire sound data of a sound emitted from an inspection target in a prescribed period via the microphone 110 and the audio interface 120 without reading out it from the storage unit 143.

The processing unit 142 performs analysis processing on the sound data, read out at step St11, of the recorded sound of the prescribed period to judge presence/absence of a variation amount of a steady-state sound and a frequency of occurrence of sudden sound (St12).

The processing unit 142 performs examination processing corresponding to results of the analysis processing performed at step St12 by reading out, from the storage unit 143, a collation database that correlates the results of the analysis processing and information of an event that is considered to be a cause of the results and referring to it (St13).

The processing unit 142 stores, in the storage unit 143, the results of the analysis processing performed at step St12 and a result of the examination processing performed at step St13 in such a manner that they are correlated with each of an installation location of the inspection target corresponding to the sound data that was read out at step St11, the inspection target, and a sound collection time (St14).

Referring to Fig. 9A, when detecting that each of an installation location of an inspection target that a user is desired to check, the inspection target, and a sound collection time has been input (selected) by the user who uses the information processing apparatus 140 (St21: yes), the processing unit 142 acquires, through reading from the storage unit 143, analysis results and an examination result corresponding to the input (selected) items (St22). If an installation location of an inspection target that a user is desired to check, the inspection target, and a sound collection time have not been input (selected) (St21: no), the execution of the process shown in Fig. 9A is finished.

The processing unit 142 generates a sound state transition display screen WD1 including a sound state transition graph GPH1 indicating a relationship between the steady-state sound variation amount and the sudden sound frequency and examination results (examined contents RST1) using the analysis results and the examination result acquired in step St22 (St23). The processing unit 142 displays the generated sound state transition display screen WD1 on the display unit 145 (St24).

Fig. 9B is a flowchart showing an example display screen generation procedure according to the first embodiment. A display screen is generated by employing, as axes, the analysis results of two of analysis methods (e.g., FFT, sound volume variation detection, and pulsation extraction) that have extracted plural respective feature points in the feature extraction unit 152 of the information processing apparatus 140.

The information processing apparatus 140 performs analysis processing on input sound (i.e., recorded sound) using each of plural analysis methods such as sound volume variation detection and pulsation extraction and thereby extracts n kinds (n: an integer that is larger than or equal to 2) of feature points (St31). The term "kinds" as used above means kinds of analysis methods.

The information processing apparatus 140 extracts k kinds (k < n; k: an integer that is larger than or equal to 0) of feature points (i.e., analysis processing methods) that are judged to have a prescribed variation among the n kinds of extracted feature points (i.e., results of n kinds of analysis processing) (St32).

The information processing apparatus 140 judges whether k (the number of feature points judged in step St32 to have a variation) is equal to 0 (St33). If k = 0 (St33: yes), the information processing apparatus 140 judges that the recorded sound has no abnormality (St34). The generation of a display screen is finished if the process moves to step S34.

On the other hand, if k (the number of feature points judged in step St33 to have a variation) is not equal to 0 (St33: no), the information processing apparatus 140 selects two kinds of feature points from the n kinds of feature points (i.e., analysis results of the n respective analysis methods) and generates a two-dimensional display screen using the two kinds of feature points as a vertical axis and a horizontal axis, respectively (St35).

A procedure for generating, for example, the sound state transition display screen WD1 shown in Fig. 3 is explained below as an example two-dimensional display screen generated in accordance with the display screen generation procedure shown in Fig. 9B. In the case of the sound state transition display screen WD1 shown in Fig. 3, the information processing apparatus 140 (e.g., feature extraction unit 152) performs analysis processing by at least two kinds of analysis methods, that is, analysis processing for analyzing a steady-state sound variation amount and analysis processing for analyzing a sudden sound frequency. At step St31, the information processing apparatus 140 extracts a feature point as a variation-found analysis result of the analysis processing relating to the steady-state sound variation amount and a feature point as an analysis result of the analysis processing relating to the sudden sound frequency. At step St35, the information processing apparatus 140 generates a sound state transition display screen WD1 using the feature point relating to the steady-state sound variation amount and the feature point relating to the sudden sound frequency as the horizontal axis and the vertical axis, respectively.

If at step St33 the number k of kinds of variation-found feature points is equal to 1, at step St32 the information processing apparatus 140 generates a two-dimensional display screen using having, as axes, one feature point that was judged to have a variation at step St32 and another feature point that was judged not to have a variation at step St32.

As described above, in the sound state display system 1000 according to the first embodiment, the processing unit 142 (one form of an acquisition unit) of the information processing apparatus 140 acquires sound data obtained by collecting a sound emitted from an inspection target (e.g., the inspection targetMC1 shown in Fig. 2A). The processing unit 142 (one form of an analysis unit) of the information processing apparatus 140 performs analysis processing relating to plural different indices to indicate presence/absence of an abnormality in the inspection target, on the basis of the acquired sound data. The processing unit 142 (one form of a generation unit) of the information processing apparatus 140 generates a sound state transition display screen WD1 (one form of a sound state screen) that indicates a sound state of the sound emitted from the inspection target using the plural different indices, on the basis of a result of the analysis processing. The processing unit 142 (one form of a display control unit) of the information processing apparatus 140 displays the generated sound state transition display screen WD1 on the display unit 145 (an example of a display device).

Having the above configuration, the sound state display system 1000 can present, to a user such as an inspector, a normal/abnormal state of an inspection target that the user is going to inspect in an easy-to-understand manner and hence can assist not only a very skilled inspector but also an inspector not having sufficient knowledge or experiences in increasing the convenience of inspection work of the inspector.

The plural different indices are an index relating to a variation amount of a sound emitted from the inspection target steadily and an index relating to a frequency of occurrence of a sound emitted from the inspection target suddenly. With this feature, the information processing apparatus 140 can properly judge whether a sound emitted from an inspection target such as a compressor has an abnormality by judging whether a sound emitted steadily has a variation from a reference state that is set for each inspection target or whether the frequency of occurrence of sudden sounds such as abnormal sounds is high. Furthermore, the user such as an inspector can recognize presence/absence of an abnormality in an inspection target visually and efficiently from the viewpoint that a sound that is emitted steadily has a variation amount or not and the viewpoint that the frequency of occurrence of sudden sounds such as abnormal sounds is high or not.

In generating the sound state screen, the information processing apparatus 140 generates a sound state transition display screen WD1 that indicates accumulated sound states corresponding to results of the analysis processing that is performed every time a sound emitted from the inspection target is collected. With this measure, since the information processing apparatus 140 stores and shows, in the sound state transition display screen WD1, a sound state (i.e., a state of a collected sound indicating presence/absence of an abnormality) that is a result of analysis processing performed on a collected sound every time a sound emitted from the inspection target is collected (recorded), the user such as an inspector can recognize, in a comprehensive manner, sound states of respective recorded (collected sounds) emitted from the inspection target.

The information processing apparatus 140 acquires an examination result indicating a cause of an abnormality in the inspection target on the basis of the result of the analysis processing. The information processing apparatus 140 generates the sound state transition display screen WD1 so that it includes the acquired examination result (examined contents RST1). This measure allows the user to recognize in an easy-to-understand manner and in a specific manner, that is, what kind of abnormality exists in what portion of the inspection target, by merely seeing the sound state transition display screen WD1.

The information processing apparatus 140 generates a sound state transition display screen WD1 in which sound state points indicating sound states are plotted in a graph having the plural different indices as axes. This measure allows the user to easily recognize whether an inspection target has an abnormality by seeing a sound state transition display screen WD1 that shows visually sound states obtained through analyses on sounds emitted from the inspection target.

The information processing apparatus 140 further includes the step of displaying a screen for selecting a characteristic waveform corresponding to a sound state point in response to a user operation on the sound state point. This measure allows the user to select a characteristic waveform of a sound state point lying on his or her mind and hence can check whether it is a prescribed one.

The information processing apparatus 140 displays, on the display unit 145, a waveform display screen WD2 indicating a time-axis waveform of a sound emitted from the inspection target that corresponds to one of plural sound state points shown in the sound state transition display screen WD1 in response to a user operation on that sound state point. This measure allows the user to directly check a time-axis waveform of a recorded sound by a simple operation of designating a sound state point lying on his or her mind and to recognize presence/absence of an abnormality from that waveform.

The information processing apparatus 140 reproduces and outputs, in response to designation, through the waveform display screen WD2, of a reproduction start time of the sound emitted from the inspection target, the sound emitted from the inspection target from the designated reproduction start time. This measure allows the user to hear an actual sound of a sound state point lying on his or her mind from a reproduction start time designated by himself or herself and hence to check (e.g., know by analogy) presence/absence of an abnormality from the sound he or she has heard.

The information processing apparatus 140 displays, on the display unit 145, a frequency display screen WD3 indicating a frequency characteristic waveform of a sound emitted from the inspection target that corresponds to one of plural sound state points shown in the sound state transition display screen WD1 in response to a user operation on that sound state point. This measure allows the user to directly check a frequency-axis waveform of a recorded sound by a simple operation of designating a sound state point lying on his or her mind and to recognize presence/absence of an abnormality from that waveform.

The information processing apparatus 140 reproduces and outputs, in response to designation, through the frequency display screen WD3, of a reproduction start time of the sound emitted from the inspection target, the sound emitted from the inspection target from the designated reproduction start time. This measure allows the user to hear an actual sound of a sound state point lying on his or her mind from a reproduction start time designated by himself or herself and hence to check (e.g., know by analogy) presence/absence of an abnormality from the sound he or she has heard.

The information processing apparatus 140 further includes the step of displaying, on the display device, a waveform display screen WD2 indicating a spectrogram characteristic waveform of a sound emitted from the inspection target that corresponds to the sound state point in response to a user operation on the sound state point. This measure allows the user to hear an actual sound of a sound state point, lying on his or her mind, of the inspection target and hence to check (e.g., know by analogy) presence/absence of an abnormality from the sound he or she has heard.

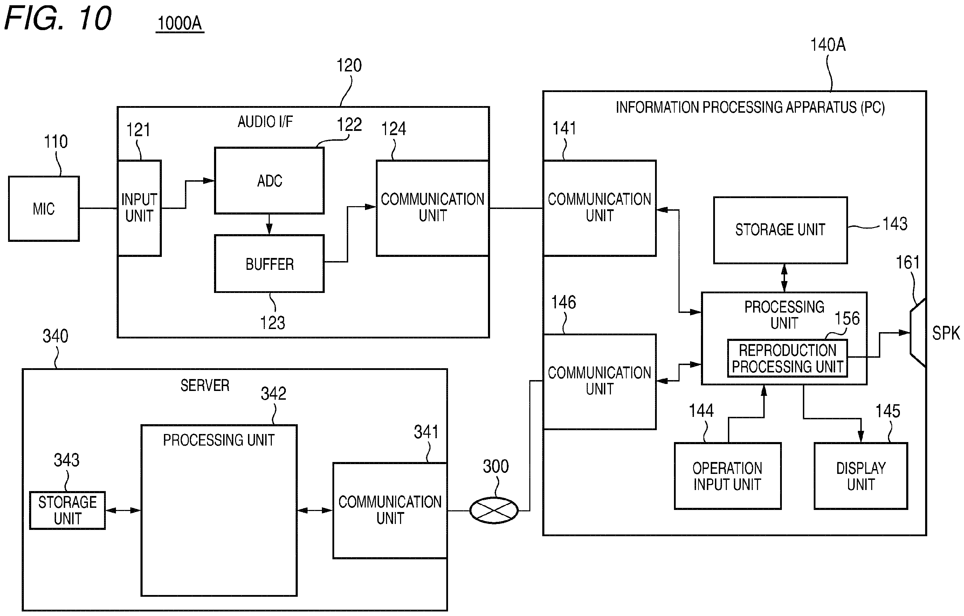

At least part of the analysis processing, the examination processing, the processing for generating a sound state transition display screen WD1, the processing for generating a waveform display screen WD2, and the processing for generating a frequency display screen WD3 which are performed by the above-described information processing apparatus 140 may be performed by a server 340 that is connected to the information processing apparatus 140 a cable or wireless network (see Fig. 10).

Fig. 10 is a block diagram showing an example system configuration of another sound state display system according to the first embodiment. The sound state display system 1000A shown in Fig. 10 is equipped with, in addition to the sound state display system 1000 shown in Fig. 1A, a server 340 to which the information processing apparatus 140A which corresponds to the information processing apparatus 140 is connected via a network or a communication line. The server 340 performs the analysis processing, the examination processing, the processing for generating a sound state transition display screen WD1, the processing for generating a waveform display screen WD2, and the processing for generating a frequency display screen WD3.

The sound state display system 1000A is configured so as to include microphone(s) 110, an audio interface 120, the information processing apparatus 140A, and the server 340. Elements having the same ones in the sound state display system 1000 shown in Fig. 1A will be given the same symbols as the latter and will be described in a simplified manner or will not be described at all; only differences will be described.

The information processing apparatus 140A is configured so as to include a communication unit 141, a processing unit 142A, a storage unit 143, a operation input unit 144, a display unit 145, and a communication unit 146. The processing unit 142A is configured using a processor such as a CPU (central processing unit), a DSP (digital signal processor), or an FPGA (field-programmable gate array). The processing unit 142A performs various kinds of processing (e.g., issuance of an instruction to perform processing of analyzing a recorded sound, issuance of an instruction to perform processing of examining analysis results, issuance of an instruction to perform processing of generating a sound state transition display screen, and processing of displaying a sound state transition display screen) in accordance with prescribed programs stored in the storage unit 143. The communication unit 146, which is configured using a communication circuit having a wired or wireless communication interface, performs a communication with the external server 340. The information processing apparatus 140Ais connected to the server 340 via a wired or wireless communication path 300. In the other part of the configuration, the sound state display system 1000A is the same as the sound state display system 1000 shown in Fig. 1A; only differences will be described below.

The server 340 is, for example, an information processing apparatus (computer) having such hardware components as a processor and memories and performs various kinds of information processing such as processing of analyzing a sound emitted from an inspection target (in other words, a sound collected by the microphone 110), processing of examining analysis results, processing of generating displaying a sound state transition display screen, and processing of displaying a sound state transition display screen. The server 340 is configured so as to include a communication unit 341, a processing unit 342, and a storage unit 343.

The communication unit 341 is configured using a communication circuit for transmitting and receiving various kinds of data such as sound data and leaning data to and from the information processing apparatus 140A, and transmits and receives data or information to and from the information processing apparatus 140A.

The processing unit 342, which is an example of each of the analysis unit and the generation unit, is configured using a processor such as a CPU (central processing unit), a DSP (digital signal processor), or an FPGA (field-programmable gate array). The processing unit 342A performs various kinds of processing (e.g., processing of analyzing a recorded sound, processing of examining analysis results, and processing of generating displaying a sound state transition display screen) in accordance with prescribed programs stored in the storage unit 343. All of the processing of analyzing a recorded sound, the processing of examining analysis results, and the processing of generating displaying a sound state transition display screen may be performed by the processing unit 342. Alternatively, part of these kinds of processing may be performed by the processing unit 342, the remaining part being performed by the processing unit 142A of the information processing apparatus 140A.

In the example configuration shown in Fig. 10, the kinds of processing to be performed by the sound state display system 1000A according to the first embodiment are performed in a distributed manner by the plural information processing apparatus (more specifically, information processing apparatus 140 and server 340) that are connected to each other by the network. In particular, it becomes easier to accommodate complex algorithm computation, high-speed processing, etc. by performing the processing of analyzing a recorded sound, the processing of examining analysis results, and the processing of learning learning data to be used for the analysis processing (described above) using the information processing apparatus, having a high processing ability, of the server 340. The learning processing using learning data, the processing of analyzing a recorded sound, and the processing of examining analysis results may be performed by assigning them to the local information processing apparatus 140A connected to the audio interface 120, the server 340, etc. as appropriate. For example, the various kinds of processing relating to the first embodiment can be performed by the information processing apparatus 140A and the server 340 with proper sharing according to various conditions such as a system configuration, a use environment, data processing algorithms, an amount of data, data characteristics, and an output form.

Although the various embodiments have been described above with reference to the drawings, it goes without saying that the disclosure is not limited to those examples. It is apparent that those skilled in the art could conceive various changes, modifications, replacements, additions, deletions, or equivalents within the confines of the claims, and they are naturally construed as being included in the technical scope of the disclosure. Constituent elements of the above-described embodiments can be combined in a desired manner without departing from the spirit and scope of the invention.

The present application is based on Japanese Patent Application No. 2018-213587 filed on November 14, 2018, the disclosure of which is invoked herein by reference.

### INDUSTRIAL APPLICABILITY

The present disclosure is useful as a sound state display method, a sound state display apparatus, and a sound state display system for presenting, to an inspector, a normal/abnormal state of an inspection target in an easy-to-understand manner and thereby assisting in increasing the convenience of inspection work of the inspector.

### DESCRIPTION OF REFERENCE SIGNS

- 110:: Microphone

- 120:: Audio interface
- 121:: Input unit
- 122:: AD converter
- 123:: Buffer
- 124, 141:: Communication unit
- 140:: Information processing apparatus
- 142:: Processing unit
- 143:: Storage unit
- 144:: Operation input unit
- 145:: Display unit
- 156:: Reproduction processing unit
- 161:: Speaker

## Claims

1. A sound state display method comprising the steps of:
acquiring sound data obtained by collecting a sound emitted from an inspection target;
performing analysis processing based on the sound data, the analysis processing relating to plural different indices to indicate presence or absence of an abnormality in the inspection target;
generating a sound state screen based on a result of the analysis processing, the sound state screen indicating a sound state of the sound emitted from the inspection target using the plural different indices; and
displaying the generated sound state screen on a display device.

2. The sound state display method according to claim 1,
wherein the plural different indices comprise an index relating to a variation amount of a sound emitted from the inspection target steadily and an index relating to a frequency of occurrence of a sound emitted from the inspection target suddenly.

3. The sound state display method according to claim 1,
wherein the step of generating the sound state screen comprises a step of generating the sound state screen to indicate accumulated sound states corresponding to results of the analysis processing that is performed every time a sound emitted from the inspection target is collected.

4. The sound state display method according to any one of claims 1 to 3, further comprising the step of:
acquiring an examination result indicating a cause of an abnormality in the inspection target on the basis of the result of the analysis processing,
wherein the step of generating the sound state screen comprises a step of generating the sound state screen to include the acquired examination result.

5. The sound state display method according to any one of claims 1 to 4,
wherein the step of generating the sound state screen comprises a step of generating the sound state screen to plot a sound state point indicating the sound state in a graph having the plural different indices as axes.

6. The sound state display method according to claim 5, further comprising the step of:
displaying a selection screen in response to a user operation on the sound state point, the selection screen for selecting a characteristic waveform corresponding to the sound state point.

7. The sound state display method according to claim 6, further comprising the step of:
displaying a waveform display screen on the display device in response to a user operation on the sound state point, the waveform display screen indicating a time-axis waveform of a sound emitted from the inspection target corresponding to the sound state point.

8. The sound state display method according to claim 7, further comprising the step of:
reproducing and outputting, in response to designation of a reproduction start time of the sound emitted from the inspection target through the waveform display screen, the sound emitted from the inspection target from the designated reproduction start time.

9. The sound state display method according to claim 6, further comprising the step of:
displaying a frequency display screen on the display device in response to a user operation on the sound state point, the frequency display screen indicating a frequency characteristic waveform of a sound emitted from the inspection target corresponding to the sound state point.

10. The sound state display method according to claim 9, further comprising the step of:
reproducing and outputting, in response to designation of a reproduction start time of the sound emitted from the inspection target through the frequency display screen, the sound emitted from the inspection target from the designated reproduction start time.

11. The sound state display method according to claim 6, further comprising the step of:
displaying a waveform display screen on the display device in response to a user operation on the sound state point, the waveform display screen indicating a spectrogram characteristic waveform of a sound emitted from the inspection target corresponding to the sound state point.

12. A sound state display apparatus comprising:
an acquisition unit configured to acquire sound data obtained by collecting a sound emitted from an inspection target;
an analysis unit configured to perform analysis processing based on the sound data, the analysis processing relating to plural different indices to indicate presence or absence of an abnormality in the inspection target;
a generation unit configured to generate a sound state screen based on a result of the analysis processing, the sound state screen indicating a sound state of the sound emitted from the inspection target using the plural different indices; and
a display control unit configured to display the generated sound state screen on a display device.

13. A sound state display system comprising:
an acquisition unit configured to acquire sound data obtained by collecting a sound emitted from an inspection target;
an analysis unit configured to perform analysis processing based on the sound date, the analysis processing relating to plural different indices to indicate presence or absence of an abnormality in the inspection target;
a generation unit configured to generate a sound state screen based on a result of the analysis processing, the sound state screen indicating a sound state of the sound emitted from the inspection target using the plural different indices; and
a display control unit configured to display the generated sound state screen on a display device.
